# EUROPÄISCHE PATENTSCHRIFT

(11) **EP 1 994 295 B1**
(45) Veröffentlichungstag und Bekanntmachung des Hinweises auf die Patenterteilung: **08.09.2010**
(21) Anmeldenummer: 07711840.4
(22) Anmeldetag: 07.03.2007
(51) Int. Cl.: F16D 7/08

(54) **ÜBERLASTKUPPLUNG MIT KLEMMNABE**
OVERLOAD COUPLING HAVING A CLAMPING HUB
ACCOUPLEMENT DE SURCHARGE AVEC MOYEU DE SERRAGE

(30) Priorität: 10.03.2006 DE 102006011179
(43) Veröffentlichungstag der Anmeldung: 26.11.2008
(73) Patentinhaber: Chr. Mayr GmbH & Co. KG, 87665 Mauerstetten (DE)
(72) Erfinder: VOGL, Norbert, 86935 Rott am Lech (DE)
(74) Vertreter: Ruschke, Hans Edvard
(86) Internationale Anmeldenummer: PCT/EP2007/001977
(87) Internationale Veröffentlichungsnummer: WO 2007/104459

(56) Entgegenhaltungen:
- DE-A1- 10 314 219
- DE-A1- 10 334 076

## Beschreibung

Für den Einsatz in der Antriebstechnik müssen Sicherheitsktipptungen neben einem präzisen Überlastschutz folgenden Anforderungen genügen:
- Geringes Massenträgheitsmoment für hohe Dynamik des Antriebsstranges
- Einfache Montage und Demontage der Kupplung in der Anlage
- Spielfreiheit und hohe Übertragungssicherheit der Welle-Nabe-Verbindung
- Komfortable Ablesung und Veränderung des eingestellten Drehmoments
- Problemloser Umbau der Kupplung auf andere Drehmomentbereiche
- Formschlüssige Sicherung der Nachstellmutter gegen Verdrehen

Bei Klemmnaben von Überlastkupplungen nach dem Stand der Technik kommt es im Bereich des Klemmschlitzes grundsätzlich zu elastischen Verformungen, die eine überlagerte elastische oder auch plastische Biegung der Klemmschraube zur Folge haben. Um hier Brüche der Klemmschraube sicher auszuschließen, müssen die Anzugsmomente und damit die erzielten Klemmkräfte reduziert werden.

Aus DE 103 14 219 der Anmelderin ist eine Überlastkupplung bekannt, die anhand einer Skalierung und einer zugeordneten Referenzmarke eine direkte Ablesung des an der Kupplung eingestellten Überlastdrehmomentes ermöglicht. Gleichzeitig wird durch die Skalierung eine direkte Verstellung des eingestellten Überlastdrehmomentes wesentlich erleichtert.

Überlastkupplungen nach dem Stand der Technik wie DE 103 14 219 sind unabhängig vom jeweils vorliegenden Einstellbereich mit einer Zahl von Tellerfedern bestückt, mit der alle für die Kupplung vorgesehenen Drehmomentbereiche abgedeckt werden. Je nach dem gewünschten Drehmomentbereich wird die somit benötigte Zahl von Federn so eingebaut, dass sie ihre Funktion als Tellerfedern erfüllen, wobei die übrigen Federn um 180° gewendet werden und als Ausgleichsscheiben fungieren. Falls ein Kunde durch Änderung bei der Ermittlung des an der Überlastkupplung einzustellenden Drehmoments eine nicht passende Federschichtung erhält, muss die Federschichtung und damit der Drehmomentbereich geändert werden.

Der Erfindung liegt die Aufgabe zugrunde, eine Klemmnabe zu schaffen, welche grundsätzlich die Forderung des Marktes nach einer spielfreien Drehmomentübertragung für hochdynamische Antriebe erfüllt. Außerdem sollte eine ausreichende Sicherheit der Drehmomentübertragung bzw. bessere Klemmung mit der Welle vorhanden sein.

Die Skalierung sollte aus Platzgründen auf der Zylindermantelfläche des Klemmringes angeordnet sein und eine drehfeste Verbindung zwischen Nabenkörper und Klemmring erfolgen.

Als weitere Aufgabe wird ein einfacherer Federwechsel und somit Drehmomenteinstellung vorgesehen.

### Lösung:

Eine kompakte Bauform bzw. ein geringes Massenträgheitsmoment der Kupplung wird durch die spezielle Gestaltung der Klemmnabe erzielt, die erfindungsgemäß 2-teilig gestaltet ist und aus Nabenkörper und Klemmring mit Klemmschraube besteht. Wesentlich für die Realisierung der genannten kompakten Bauform ist neben der speziellen Nabengestaltung die Werkstoffwahl, wobei für den Klemmring vorzugsweise vergütete Stähle zum Einsatz kommen.

Die vom Markt geforderte einfache Montage und Demontage der Kupplung in der Anlage wird ebenfalls durch die Gestaltung der 2-teiligen Nabe realisiert, wobei die zur reibschlüssigen Verbindung von Welle und Nabe nötige Klemmkraft vorzugsweise mit nur einer tangential angeordneten Klemmschraube erzeugt wird.

Außerdem wird eine spielfreie Drehmomentübertragung erzielt, die für hochdynamische Antriebe ein wesentliches Kriterium darstellt.

Mit der erfindungsgemäßen Klemmnabe sind höhere Anzugsmomente der Klemmschraube und somit höhere Klemmkräfte erreichbar, indem am Klemmring bzw. an der Klemmnabe zwischen Gewinde und Durchgangsbohrung bzw. Kopfsenkung für die Klemmschraube bei der Fertigung ein gewisser Vorhaltewinkel realisiert wird. Dadurch werden die Biegemomente auf die Schraube minimiert und gleichzeitig wird die Sicherheit der Klemmverbindung erhöht.

Wie bei der bekannten Überlastkupplung DE 103 14 219 ist auch bei der erfindungsgemäßen Kupplung mit 2-teiliger Nabe vorgesehen, die Skalierung aus Platzgründen auf der Zylindermantelfläche des Klemmringes anzuordnen. Dazu ist eine drehfeste Verbindung zwischen Nabenkörper und Klemmring nötig, die bei der erfindungsgemäßen Überlastkupplung durch eine Schraube oder einen Stift, vorzugsweise eine Spannhülse realisiert ist, die in eine radial angeordnete Bohrung des Klemmringes eingepresst ist und in einen Schlitz des Nabenabsatzes eingreift, was eine in Drehrichtung formschlüssige Verbindung ergibt.

Durch die beschriebene Winkelfixierung zwischen Klemmring und Nabe wird somit auch die formschlüssige Sicherung der Nachstellmutter mittels einer Schraube zwischen Klemmring und Nachstellmutter ermöglicht.

Bei der erfindungsgemäßen Kupplung wird nach vollständigem Entfernen der Klemmschraube der Klemmring von der Nabe abgenommen, die Nachstellmutter demontiert und der Federwechsel kann stattfinden. Eine vollständige Entnahme der Klemmschraube ist erforderlich, da sich der Schraubenschaft mit der Zylindermantelfläche des Klemmabsatzes am Nabenkörper überschneidet bzw. in einer tangentialen Ausnehmung des Klemmabsatzes am Nabenkörper liegt. Dadurch wird eine formschlüssige Fixierung des Klemmringes auf dem Nabenkörper gegen axiale Verschiebung erreicht. Des weiteren stellt die besondere geometrische Zuordnung zwischen der Lage der Spannhülse und der Klemmschraube sicher, dass der Klemmring nur in einer genau definierten Lage auf der Nabe geklemmt werden kann.

Um die Montage des Klemmringes auf der Nabe in nur einer genau definierten Position zu ermöglichen, wird bei der erfindungsgemäßen Kupplung vorgeschlagen, die beiden nabenseitigen Klemmschlitze in unterschiedlicher Breite und unterschiedlicher axialer Länge auszuführen. Durch diese Maßnahme in Kombination mit der zur Kupplungsaußenseite versetzten Lage des klemmringseitigen Stiftes wird eine absolut seiten- und winkelgetreue Montage des Klemmringes auf der Nabe sichergestellt.

In den Zeichnungen sind Ausführungsbeispiele der Erfindung dargestellt. Darin zeigt
- **Fig. 1**: die Gesamtansicht einer erfindungsgemäßen Überlastkupplung,
- **Fig. 2**: eine Explosionsdarstellung der Überlastkupplung,
- **Fig. 3**: eine Ansicht der Drehmomentskalierung mit Referenzmarke an der Nachstellmutter,
- **Fig. 4**: einen Längsschnitt durch die Kupplung,
- **Fig. 5**: einen Querschnitt durch die Kupplung im Bereich der Klemmschraube,
- **Fig. 6**: eine weitere Explosionsdarstellung der erfindungsgemäßen Überlast kupplung mit geschlitzter Klemmnabe und einseitiger Längsschlitz- Erweiterung.

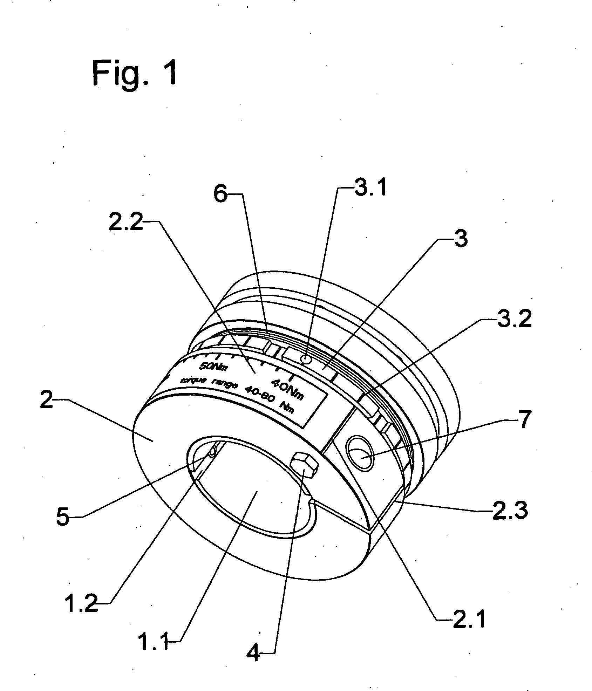

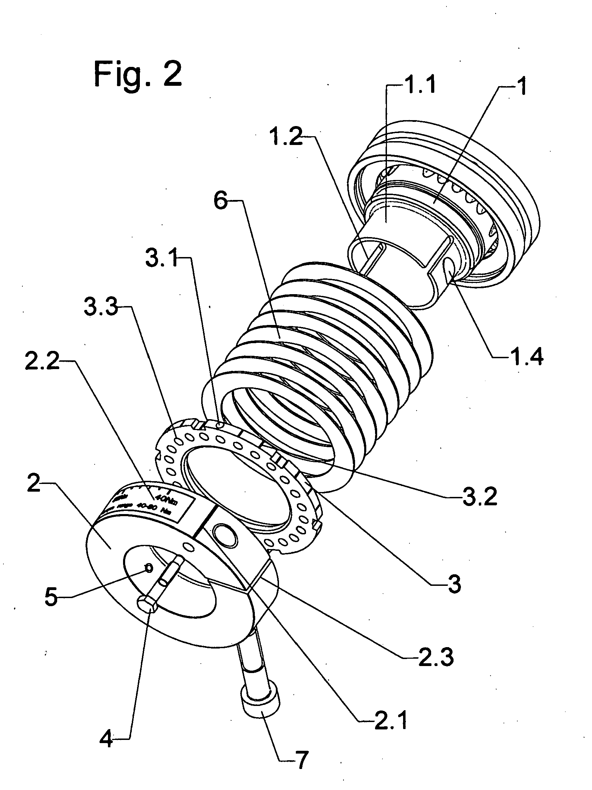

Die Gesamtansicht der **Fig. 1** bzw. die Explosionsdarstellung der **Fig. 2** zeigen die wesentlichen Bauteile der erfindungsgemäßen Kupplung.

Auf einem mit Längsschlitzen 1.2 versehenen Klemmabsati 1.1 der Nabe 1 ist konzentrisch der Klemmring 2 mit der Klemmschraube 7 angeordnet, wobei der Klemmring durch einen in einen Längsschlitz 1.2 eingreifenden radial sich erstreckenden Stift 5 gegen Verdrehen gesichert ist. Auf der Nabe 1 befindet sich die Nachstellmutter 3, mit deren Hilfe die Tellerfedern 6 axial gegen den formschlüssigen Drehmomentübertragungsmechanismus (Druckscheibe 9, Kugeln 10, Druckflansch 11) der Kupplung vorgespannt werden. Bei Überlast rastet die Kupplung aus und die Druckscheibe 9 macht eine Axialbewegung gegen den Druck der Tellerfedern 6. Somit erfolgt eine Trennung zwischen der Nabe 1 und dem Druckflansch 11. Die Nachstellmutter 3 verfügt über auf einem zur Kupplungsachse konzentrischen Teilkreis liegende achsparallel verlaufende Bohrungen 3.3, in die die in einer ebenfalls achsparallelen Gewindebohrung an der Stirnfläche des Klemmringes 2 liegende Sicherungsschraube 4 eingreift. Dadurch wird eine formschlüssige Sicherung der Nachstellmutter 3 realisiert. Die formschlüssige Sicherung kann dann aktiviert werden, wenn die Sicherungsschraube 4 einer der auf der Stirnseite verteilten Bohrungen 3.3 der Nachstellmutter 3 gegenüber steht, bzw. wenn die Markierungskerbe 2.1 des Klemmringes 2 mit einer Markierungskerbe 3.2 der Nachstellmutter 3 fluchtet.

Am Umfang des Klemmringes 2 ist eine Drehmomentskalierung 2.2 angeordnet, auf der mittels der Referenzmarke 3.1 der Nachstellmutter 3 das an der Kupplung eingestellte Drehmoment direkt abgelesen werden kann. Die Lage der Referenzmarke 3.1, vorzugsweise als farbiger Markierungspunkt auf der Nachstellmutter 3 ausgeführt, und die Lage der Drehmomentskalierung 2.2 auf dem Klemmring 2 werden bei der Kalibrierung der Kupplung definiert. Das dargestellte Ausführungsbeispiel der Kupplung ist auf 40 Nm eingestellt.

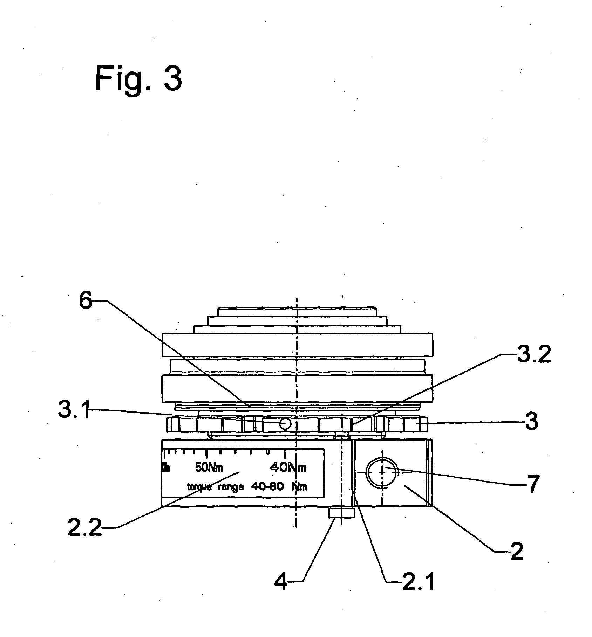

In **Fig. 3** ist eine Draufsicht der erfindungsgemäßen Kupplung dargestellt, auf der nochmals die Zuordnung zwischen der auf dem Klemmring 2 angeordneten Drehmomentskalierung 2.2 und der Referenzmarke 3.1 der Nachstellmutter 3 zu sehen ist. Ebenfalls zu sehen ist die zum Eindrehen der Sicherungsschraube 4 erforderliche Fluchtung zwischen der Markierungskerbe 2.1 des Klemmringes 2 und einer der Markierungskerben 3.2 der Nachstellmutter 3.

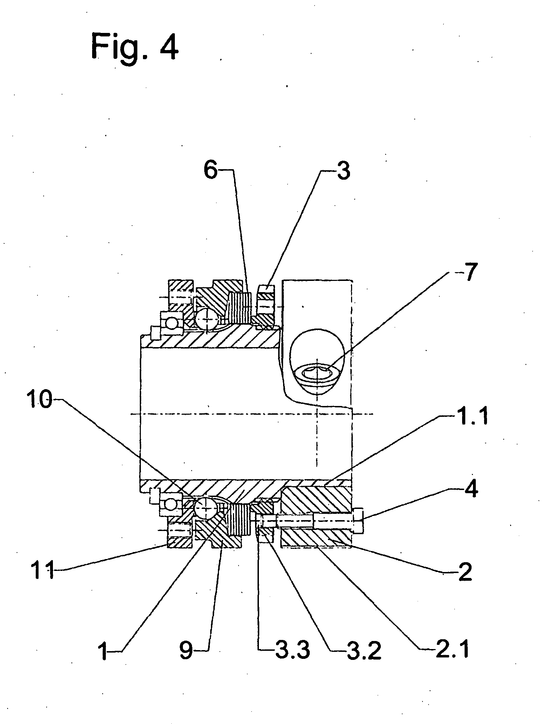

**Fig. 4** zeigt überwiegend einen Längsschnitt durch die erfindungsgemäße Kupplung. Primär ist die Anordnung des Klemmringes 2 auf dem als hülsenartige Axialverlängerung ausgebildeten Absatz 1.1 der Nabe 1 zu sehen. Dargestellt ist außerdem nochmals die Funktion der formschlüssigen Sicherung mittels der im Klemmring 2 befindlichen Sicherungsschraube 4 in der Bohrung 3.3 der Nachstellmutter 3. Dabei fluchten Markierungskerbe 2.1 und Markierungskerbe 3.2.

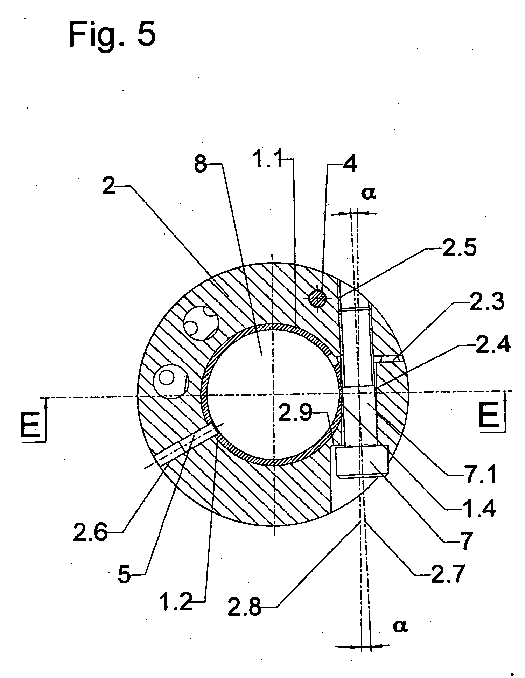

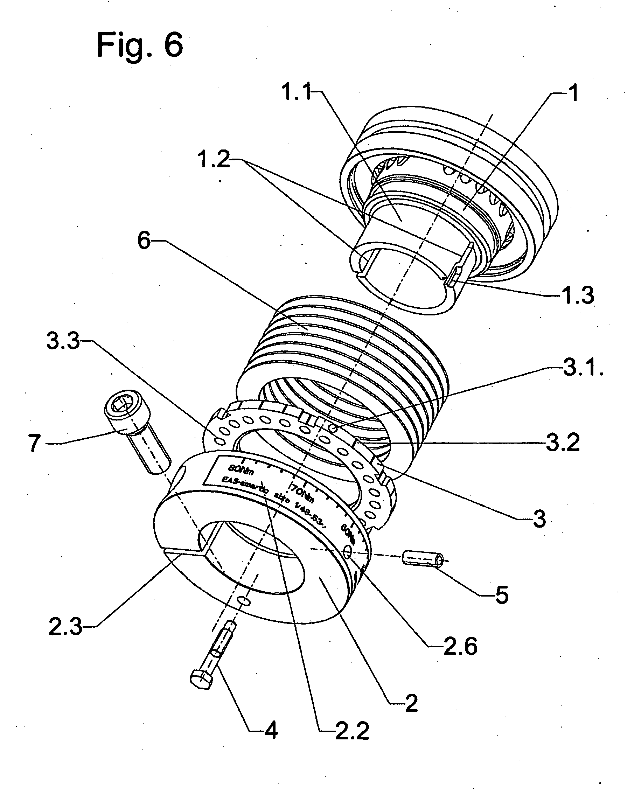

In **Fig. 5** ist ein Querschnitt durch die Kupplung in der Ebene der Klemmschraube 7 dargestellt. Zu sehen ist die drehfeste formschlüssige Verbindung zwischen dem in einer radialen Bohrung 2.6 des Klemmringes 2 befindlichen Stift 5, vorzugsweise eine Spannhülse (innen hohl mit Längsschlitz, siehe Fig. 6) und dem in einem Absatz 1.1 der Nabe 1 befindlichen Längsschlitz 1.2.

Weiterhin ist in **Fig. 5** die Lage des Schaftes 7.1 der Klemmschraube 7 in einer Aussparung 1.4 (siehe auch Fig. 2 -Aussparung 1.4) am Absatz 1.1 der Nabe 1 dargestellt. Dadurch kann ein zusätzlicher Formschluss zwischen Klemmring 2 und Nabenabsatz 1.1 sichergestellt werden, der eine axiale Verschiebung bzw. ein Abfallen (z.B. beim Transport) des Klemmringes 2 von der Nabe 1 sicher verhindert. Als weiteres erfindungsgemäßes Detail in **Fig. 5** ist eine Schrägstellung zwischen Gewinde 2.5 und der Durchgangsbohrung 2.4 bzw. der Kopfauflage 2.9 für den Schaft 7.1 bzw. den Kopf der Klemmschraube 7 im Klemmring 2 zu sehen. Die genannte Schrägstellung stellt sich als Winkelversatz "α" zwischen der Achse des Gewindes 2.7 und der Achse der Durchgangsbohrung 2.8 dar in Fig. 5. Die Schrägstellung führt zur Minimierung der durch elastische oder teilplastische Verformung des Klemmringes 2 während der Klemmung auf die Schraube 7 zusätzlich wirkenden Biegemomente. Die Klemmung der Nabeneinheit bestehend aus Nabe 1, Klemmring 2 und Klemmschraube 7 erfolgt auf der in der Zeichnung der Fig. 5 nicht näher dargestellten Welle 8.

**Fig. 6** zeigt ein weiteres Ausführungsbeispiel der Kupplung als Explosionsdarstellung. Auch hier besteht die Kupplung aus einer Nabe 1, auf deren als hülsenartige Axialverlängerung ausgebildeten Klemmabsatz 1.1 konzentrisch der Klemmring 2 mit Klemmschraube 7 angeordnet ist. Der Klemmring 2 ist auf der Nabe 1 durch einen Stift 5, der radial in die Längsschlitz-Erweiterung 1.3 des Nabenabsatzes 1.1 der Nabe 1 ragt, formschlüssig gegen Verdrehung gesichert.

Durch die einseitig angeordnete Längsschlitz-Erweiterung 1.3 ist sichergestellt, dass der Klemmring 2 nur in einer genau definierten Winkellage auf der Nabe 1 montierbar ist. Die aus der Klemmringmitte zur Außenseite der Kupplung versetzte Lage der für den Stift 5 vorgesehenen Radialbohrung 2.6 im Klemmring 2 verhindert zudem in Kombination mit der darauf abgestimmten Länge der Längsschlitz-Erweiterung 1.3 die seitenverkehrte Montage des Klemmringes 2 auf dem Nabenabsatz 1.1.

Wie bei den anderen Ausführungsbeispielen der erfindungsgemäßen Kupplung ist bei der Kupplung nach **Fig. 6** eine formschlüssige Sicherung der Nachstellmutter 3 durch eine in den Klemmring 2 eingeschraubte Sicherungsschraube 4 gewährleistet, die in eine der stirnseitig verteilten Bohrungen 3.3 der Nachstellmutter 3 eingreift.

Zur Drehmomentverstellung wird die Sicherungsschraube 4 aus dem Klemmring 2 und damit aus der Bohrung 3.3 der Nachstellmutter 3 zurückgedreht und lässt damit eine Verdrehung der Nachstellmutter 3 auf der Nabe 1 und damit eine Veränderung der Vorspannung der Federn 6 zu. Das an der Kupplung eingestellte Drehmoment ist wie bei den eingangs beschriebenen Ausführungsformen zwischen Referenzmarke 3.1 und Drehmomentskala 2.2 direkt ablesbar. Die dargestellte Kupplung ist demnach auf 70 Nm eingestellt.

### Bezugszeichenliste:

- 1: Nabe
- 1.1: Naben-Klemmabsatz
- 1.2: Längsschlitz
- 1.3: Längsschlitz-Erweiterung
- 1.4: Aussparung
- 2: Klemmring
- 2.1: Markierungskerbe (am Klemmring)
- 2.2: Drehmomentskala
- 2.3: Klemmschlitz
- 2.4: Durchgangsbohrung
- 2.5: Gewinde (für Klemmschraube)
- 2.6: Radialbohrung (für Stift)
- 2.7: Gewindeachse
- 2.8: Kopfsenkungsachse
- 2.9: Kopfauflagefläche
- 3: Nachstellmutter
- 3.1: Referenzmarke
- 3.2: Markierungskerbe (an der Nachstellmutter)
- 3.3: Axiale Bohrung (für Sicherungsschraube)
- 4: Sicherungsschraube
- 5: Stift / Spannhülse
- 6: Tellerfeder
- 7: Klemmschraube
- 7.1: Klemmschraubenschaft
- 8: Welle
- 9: Druckscheibe
- 10: Kugeln
- 11: Druckflansch
- α: Winkelversatz
- E: Schnittebene

## Patentansprüche

1. Überlastkupplung, mit
- einer Nabe (1) mit einem Naben-Ktemmabsatz (1.1), und einen auf diesem angeordneten Klemmring (2), ausgeführt mit einem Klemmschlitz (2.3), der mittels einer Klemmschraube (7) überbrückt wird, und
- mit einem auf der Nabe (1) angeordneten formschlüssig arbeitenden Drehmomentübertragungsmechanismus, dessen Ansprechdrehmoment mittels einer über eine Nachstellmutter (3) einstellbaren Vorspannung von Federn, vorzugsweise Tellerfedern (6) verändert werden kann,
wobei die Nabeneinheit 2-teilig ausgeführt ist und aus einer Nabe (1) mit einem Klemmring (2) besteht, die mittels der Klemmschraube (7) reibschlüssig auf einer Welle (8) geklemmt wird, **dadurch gekennzeichnet, dass** in Drehrichtung eine formschlüssige Festlegung zwischen Nabe (1) und Klemmring (2) durch einen in einen Längsschlitz (1.2) und wahlweise in eine Aussparung (1.3) des Naben-Klemmabsatzes (1.1) eingreifenden in einer Radialbohrung (2.6) des Klemmringes (2) befindlichen Stift (5) vorliegt.

2. Überlastkupplung nach Anspruch 1, **dadurch gekennzeichnet, dass** der Stift (5) vorzugsweise als Spannhülse ausgeführt ist.

3. Überlastkupplung nach Anspruch 1, **dadurch gekennzeichnet, dass** über die Winkelfixierung zwischen Nabe (1) und Klemmring (2) eine formschlüssige Sicherung der Nachstellmutter (3) mittels einer in eine Axialbohrung (3.3) greifende Sicherungsschraube (4) des Klemmringes (2) realisiert ist.

4. Überlastkupplung nach einem der Ansprüche 1 - 3, **dadurch gekennzeichnet, dass** über die Winkelfixierung zwischen Nabe (1) und Klemmring (2) eine Kalibrierung der Kupplung und damit eine direkte Drehmomentablesung an der Kupplung mittels einer Drehmomentskala (2.2) auf dem Klemmring (2) und einer Referenzmarke (3.1) auf der Nachstellmutter (3) möglich ist.

5. Überlastkupplung nach Anspruch 1, **dadurch gekennzeichnet, dass** die Durchmesser von Nabe (1), Gewinde der Nachstellmutter (3) und Naben-Klemmabsatz (1.1) bzw. Innendurchmesser des Klemmringes (2) so abgestuft sind, dass nach Demontage von Klemmring (2) und Nachstellmutter (3) ein Ausbau der Federn, vorzugsweise Tellerfedern (6), möglich ist.

6. Überlastkupplung nach Anspruch 1, **dadurch gekennzeichnet, dass** eine Überschneidung zwischen Klemmschraubenschaft (7.1) und Naben-Klemm- Absatz (1.1) in der Weise existiert, dass der Klemmschraubenschaft (7.1) in einer Aussparung (1.4) des Klemm-Absatzes (1.1) liegt und somit eine Sicherung gegen axiale Verschiebung zwischen Nabe (1) und Klemmring (2) bildet.

7. Überlastkupplung nach Anspruch 1, **dadurch gekennzeichnet, dass** der Klemmring (2) zwischen Gewinde (2.5) für klemmschraube (4) und Durchgangsbohrung (2.4) einen Winkelversatz (α) aufweist, wobei die Kopfauflagefläche (2.9) zur Durchgangsbohrung (2.4) des Klemmringes (2) senkrecht steht.

8. Überlastkupplung nach Anspruch 7, **dadurch gekennzeichnet, dass** sich die Gewindeachse (2.7) und Kopfsenkungsachse (2.8) vorzugsweise in der Schnittebene (E) schneiden.

9. Überlastkupplung nach Anspruch 1, **dadurch gekennzeichnet, dass** einer der Längsschlitze (1.2) der Nabe (1) eine Längsschlitz-Erweiterung (1.3) aufweist, die etwas breiter als der Durchmesser des Stiftes (5) ist, wobei die Breite der Längsschlitze (1.2) kleiner als der Durchmesser des Stiftes (5) ist.

10. Überlastkupplung nach den Anspruch 1-9, **dadurch gekennzeichnet, dass** die Radialbohrung (2.6) für den Stift (5) am Klemmring (2) nicht mittig angeordnet, sondern parallel zur Kupplungsachse in Richtung zur Außenseite der Kupplung hin verschoben ist.

11. Überlastkupplung nach Anspruch 9, **dadurch gekennzeichnet, dass** die axiale Erstreckung der Längsschlitz-Erweiterung (1.3) so bemessen ist, dass sich der Klemmring (2) bei seitenverkehrter Montage nicht vollständig auf den Klemm-Absatz (1.1) der Nabe (1) schieben lässt.

## Claims

1. Overload coupling comprising
- a hub (1) including a reduced-diameter hub clamping section (1.1) and a clamping ring (2) placed on said section and having a clamping slit (2.3) therethrough, said slit being bridged by means of a clamping screw (7), and
- a torque transmitting mechanism placed on the hub (1) for positive fit co-operation therewith, it's response torque being adjustable by means of bias exerted by springs, preferably disk springs (6), the spring bias being adjustable by an adjustment nut (3), wherein the hub unit being designed to comprise two-parts comprising a hub (1) and a clamping ring (2) clamped to a shaft (8) to be frictionally engaged thereto by the clamping screw (7), **characterized in that** in the direction of rotation a positive fit fixing of the hub (1) and the clamping ring (2) is achieved by means of a pin (5) present in a radial bore (2.6) of the clamping ring (2), said pin engaging a longitudinal slot (1.2) and, selectively, a recess (1.3) in the reduced-diameter hub clamping section (1.1).

2. Overload coupling according to claim 1, **characterized in that** the pin (5) preferably is provided as a clamping sleeve.

3. Overload coupling according to claim 1, **characterized in that** a positive fit retention of the adjustment nut (3) is implemented by fixing the angular position of the hub (1) in relation to the clamping ring (2) by means of a safety bolt (4) of clamping ring (2), said safety bolt engaging an axial bore (3.3).

4. Overload coupling according to any one of claims 1-3, **characterized in that** the fixing of the angular position of the hub (1) is relative to the clamping ring (2) enabling a calibration of the coupling and, thus, a direct reading of the torque on the coupling by means of a torque scale (2.2) affixed to the clamping ring (2) and a reference marker (3.1) on the adjustment nut (3).

5. Overload coupling according to claim 1, **characterized in that** the diameters of the hub (1), of the threads of the adjustment nut (3) and of the reduced-diameter section (1.1) of the hub and the inner diameter of the clamping ring (2), respectively, are downwardly stepped to enable the springs, preferably the disk spring (6), to be disassembled after the clamping ring (2) and adjustment nut (3) have been removed.

6. Overload coupling according to claim 1, **characterized by** an overlap between the clamping screw shaft (7.1) and the reduced-diameter clamping section (1.1) being present in such a manner that the clamping screw shaft (7.1) engages a recess (1.4) in the reduced-diameter section (1.1) and thereby secures the clamp ring (2) against axial displacement on the hub (1).

7. Overload coupling according to claim 1, **characterized by** the clamping ring (2) having an angular offset (α) between thread (2.5) for clamping screw (4) and through-bore (2.4), with the head engaging surface (2.9) being perpendicular to the through-bore (2.4) of the clamping ring (2).

8. Overload coupling according to claim 7, **characterized by** the axis (2.7) of said thread and the head recessing axis (2.8) preferably intersecting in the sectional plane (E).

9. Overload coupling according to claim 1, **characterized by** one of the longitudinal slots (1.2) of the hub (1) having a widened portion (1.3) slightly wider than the diameter of pin (5), the width of the longitudinal slots (1.2) being smaller than the diameter of pin (5).

10. Overload coupling according to claims 1-9, **characterized by** the radial bore (2.6) for the pin (5) not being centrally disposed in the clamping ring (2) but displaced in parallel with the axis of the coupling in the direction of the exterior of the coupling.

11. Overload coupling according to claim 9, **characterized by** the axial extent of the widened portion (1.3) of the longitudinal slot being such that the clamping ring (2) when mounted in a reversed position cannot be pushed completely onto the reduced-diameter section (1.1) of the hub (1).

## Revendications

1. Accouplement de surcharge, comprenant
- un moyeu (1) avec un épaulement de serrage de moyeu (1.1) et un anneau de serrage (2) disposé sur ce dernier, réalisée avec une fente de serrage (2.3) pontée au moyen d'une vis de serrage (7), et
- un mécanisme de transmission de couple travaillant par coopération de forme, disposé sur le moyeu (1), et dont le couple de réponse peut être changé au moyen d'une précontrainte réglable par l'intermédiaire d'un écrou d'ajustage (3) provenant de ressorts, de préférence de ressorts à disques (6),
l'unité de moyeu étant réalisée en 2 parties et constituée d'un moyeu (1) avec un anneau de serrage (2), qui est serré par force de friction sur un arbre (8) au moyen de la vis de serrage (7), **caractérisé en ce qu'**une fixation par coopération de forme est assurée dans la direction de rotation entre le moyeu (1) et l'anneau de serrage (2) par une broche (5) située dans un alésage radial (2.6) de l'anneau de serrage (2) et s'engageant dans une fente longitudinale (1.2) et sélectivement dans un évidement (1.3) de l'épaulement de serrage de moyeu (1.1).

2. Accouplement de surcharge suivant la revendication 1, **caractérisé en ce que** la broche (5) est réalisée de préférence sous forme de manchon de serrage.

3. Accouplement de surcharge suivant la revendication 1, **caractérisé en ce que**, par l'intermédiaire de la fixation angulaire entre le moyeu (1) et l'anneau de serrage (2), un blocage par coopération de forme de l'écrou d'ajustage (3) est réalisé au moyen d'une vis d'arrêt (4) de l'anneau de serrage (2) s'engageant dans un alésage axial (3.3).

4. Accouplement de surcharge suivant l'une des revendications 1 - 3, **caractérisé en ce que**, par l'intermédiaire de la fixation angulaire entre le moyeu (1) et l'anneau de serrage (2), un étalonnage de l'accouplement, et ainsi une lecture directe du couple sur l'accouplement, sont permis au moyen d'une échelle de couple (2.2) sur l'anneau de serrage (2) et d'un repère de référence (3.1) sur l'écrou d'ajustage (3).

5. Accouplement de surcharge suivant la revendication 1, **caractérisé en ce que** les diamètres du moyeu (1), du filetage de l'écrou d'ajustage (3) et de l'épaulement de serrage de moyeu (1.1) et/ou le diamètre intérieur de l'anneau de serrage (2) sont étagés de telle sorte que, après le démontage de l'anneau de serrage (2) et de l'écrou d'ajustage (3), un démontage des ressorts, de préférence des ressorts à disques (6), soit possible.

6. Accouplement de surcharge suivant la revendication 1, **caractérisé en ce qu'**un chevauchement entre la tige (7.1) de la vis de serrage et l'épaulement de serrage de moyeu (1.1) existe de manière que la tige (7.1) de la vis de serrage se situe dans un évidement (1.4) de l'épaulement de serrage (1.1) et forme ainsi un blocage contre un déplacement axial entre le moyeu (1) et l'anneau de serrage (2).

7. Accouplement de surcharge suivant la revendication 1, **caractérisé en ce que** l'anneau de serrage (2) présente, entre le filetage (2.5) pour la vis de serrage (4) et le trou de passage (2.4), un déport angulaire (α), la surface d'appui (2.9) de la tête se situant perpendiculairement par rapport au trou de passage (2.4) de l'anneau de serrage (2).

8. Accouplement de surcharge suivant la revendication 7, **caractérisé en ce que** l'axe du filetage (2.7) et l'axe de fraisage (2.8) de la tête se coupent de préférence dans le plan de coupe (E).

9. Accouplement de surcharge suivant la revendication 1, **caractérisé en ce que** l'une des fentes longitudinales (1.2) du moyeu (1) présente un élargissement (1.3) de fente longitudinale qui est légèrement plus large que le diamètre de la broche (5), la largeur des fentes longitudinales (1.2) étant plus petite que le diamètre de la broche (5).

10. Accouplement de surcharge suivant les revendications 1 - 9, **caractérisé en ce que** l'alésage radial (2.6) pour la broche (5) n'est pas disposé au centre de l'anneau de serrage (2), mais est déplacé parallèlement à l'axe de l'accouplement en direction du côté extérieur de ce dernier.

11. Accouplement de surcharge suivant la revendication 9, **caractérisé en ce que** l'extension axiale de l'élargissement (1.3) de la fente longitudinale est dimensionnée de telle sorte que l'anneau de serrage (2), lors du montage latéralement inversé, ne puisse pas être totalement poussé sur l'épaulement de serrage (1.1) du moyeu (1).
